Europäisches Patentamt

European Patent Office

Office européen des brevets

(19)

(11) Veröffentlichungsnummer : **0 043 042**
**B1**

(12) **EUROPÄISCHE PATENTSCHRIFT**

(45) Veröffentlichungstag der Patentschrift :
**15.08.84**

(21) Anmeldenummer : **81104703.4**

(22) Anmeldetag : **19.06.81**

(51) Int. Cl.³ : **G 01 N 21/78**

(54) **Vorrichtung zur kolorimetrischen Messung von Gasspuren.**

(30) Priorität : **01.07.80 DE 3024847**

(43) Veröffentlichungstag der Anmeldung :
**06.01.82 Patentblatt 82/01**

(45) Bekanntmachung des Hinweises auf die Patenterteilung : **15.08.84 Patentblatt 84/33**

(84) Benannte Vertragsstaaten :
**CH DE FR GB LI NL**

(56) Entgegenhaltungen :
**DE-A- 2 060 865
DE-A- 2 348 090
DE-A- 2 723 310
US-A- 2 323 675
US-A- 2 760 922
US-A- 2 983 184
US-A- 3 712 792**

(73) Patentinhaber : **BAYER AG
Konzernverwaltung RP Patentabteilung
D-5090 Leverkusen 1 Bayerwerk (DE)**

(72) Erfinder : **Fritze, Ulrich, Dr.
Haferkamp 6
D-5000 Köln 80 (DE)**
Erfinder : **Janser, Gerd
Dresdener Strasse 9
D-5000 Köln 80 (DE)**
Erfinder : **Herschinger, Heinz
Zedernweg 1
D-5090 Leverkusen 3 (DE)**
Erfinder : **Kitzelmann, Dieter, Dr.
Im Michelsfeld 11A
D-5300 Bonn 3 (DE)**

EP 0 043 042 B1

Jouve, 18, rue St-Denis, 75001 Paris, France

## Beschreibung

Die Erfindung betrifft eine Vorrichtung zur Messung von Gasspuren. Bekannte Bestandteile einer derartigen Vorrichtung sind eine vertikal angeordnete Zerstäubervorrichtung, in der eine Reaktionsflüssigkeit zusammen mit dem zu messenden Gas kontinuierlich zerstäubt wird, und ein daran anschließendes Trennrohr, das über einen hydrophilen Flüssigkeitsleiter mit einer Meßzelle verbunden ist.

Zweck des Gerätes ist, rechtzeitig gesundheitsgefährdende Gase, z. B. in Laboratorien, chemischen Produktionsbetrieben oder in der Umgebung solcher Betriebe zu erkennen. Rechtzeitig heißt dabei, daß innerhalb einiger Sekunden nach Auftreten des gefährdenden Gases auch Spuren dieses Gases, d. h. Bruchteile eines ml pro m³ Raumluft erfaßt werden können und einen Alarm auslösen. Eine weitere Forderung an eine Gasspurenmeß- und Warnvorrichtung besteht darin, daß das Gerät nach Auftreten höherer Gaskonzentrationen, z. B. in der Größenordnung von Liter pro m³, ausreichend schnell, d. h. innerhalb einiger Minuten, wieder meßbereit für Gasspuren ist (kurze Regenerationszeit). Nicht zuletzt muß von einem Gasspurengerät ein möglichst wartungsfreier Betrieb gefordert werden, d. h., daß erst nach längeren Zeitabständen, z. B. 3 Wochen oder mehr, ein kontrollierender oder korrigierender Eingriff erforderlich ist und z. B. benötigte Hilfslösungen erneuert werden müssen.

In der DE-A-2 723 310 wird eine Vorrichtung zur Messung von Gasspuren beschrieben, bei der die Reaktionsflüssigkeit zusammen mit dem zu messenden Gas kontinuierlich zerstäubt, anschließend die flüssige Phase in einem Trennrohr abgetrennt wird und mittels eines hydrophilen Flüssigkeitsleiters in eine elektrochemische Meßzelle geleitet wird. Diese Vorrichtung hat sich im großen und ganzen bewährt. In einigen Fällen wird jedoch der elektrochemische Nachweis durch die Anwesenheit anderer Gaskomponenten stark gestört, weil es nicht gelingt, die Querempfindlichkeit gegenüber diesen Komponenten zu unterdrücken. Außerdem lassen sich eine Reihe von Komponenten auf diesem Wege schlecht oder gar nicht nachweisen. Aus diesem Grunde wurden Versuche mit dem Ziel durchgeführt, den elektrochemischen Nachweis durch einen optischen Nachweis mit hoher Selektivität (Absorptionsmessung) zu ersetzen.

Gasspurenmeßgeräte, die darauf beruhen, daß das zu messende Gas in einer Reaktionsflüssigkeit absorbiert wird und eine Farbreaktion eingeht, die photometrisch ausgewertet wird, sind vielfach in der Literatur beschrieben. Dabei wird die zu untersuchende Luft durch eine geeignete Lösung geleitet, mit welcher die zu erfassende Gaskomponente eine charakteristische Farbreaktion eingeht. Um wechselnde Fremdgaskonzentrationen laufend registrieren zu können — was eine Grundbedingung für ein automatisches Gasspurenmeßgerät ist — muß die Reaktionslösung dauernd erneuert werden. Eine ausreichend hohe Meßempfindlichkeit erreicht man aber nur dann, wenn die zu untersuchende Gaskomponente möglichst vollständig in der Reaktionslösung absorbiert wird. Zu diesem Zweck muß ein möglichst inniger Kontakt zwischen dem Meßgas und der Flüssigkeit hergestellt werden. Dies erreicht man z. B. dadurch, daß man die zu untersuchende Luft mit Hilfe von Glasfritten durch die Flüssigkeit hindurchperlen läßt. Eine andere Möglichkeit besteht gemäß US-A-2 323 675 darin, daß man die Reaktionslösung in einer geschlossenen Kammer versprüht und das Meßgas langsam durch die Kammer hindurchströmen läßt. Eine wesentliche gaskinetische Voraussetzung für einen hohen Absorptionsgrad ist eine ausreichend große Verweilzeit, d. h. Kontaktzeit zwischen dem Gas- und dem Flüssigkeitsstrom, damit genügend Zeit für den Absorptionsvorgang zur Verfügung steht. Diese Vorschrift steht im Widerspruch mit der Forderung nach einem guten Zeitverhalten des Meßgerätes. Unter einem « guten Zeitverhalten » wird verstanden, daß sowohl die Ansprechzeit (Rechtzeitigkeit), als auch die Regenerationszeit möglichst kurz ist. Bei allen bekannten Geräten dieser Art, die auf einer kolorimetrischen Erfassung der Verfärbung einer Reaktionslösung beruhen, besteht der Nachteil, daß kontinuierlich eine relativ große Menge Reaktionslösung verbraucht wird. Um den Verbrauch an Reaktionslösung zu reduzieren, könnte man daran denken, das Verhältnis von ständig fließendem Reaktionslösungsstrom (m³/h) zu Meßgasstrom (m³/h) außerordentlich niedrig zu halten, z. B. 1 : 100. In diesem Falle würden sich aber bei den herkömmlichen Apparaturen ncch nicht gelöste strömungstechnische und absorptionstechnische Probleme ergeben.

Eine spezielle Durchflußmeßzelle für kolorimetrische Messungen ist in US-A-2 983 184 beschrieben. Da die Meßaufgabe in diesem Falle von stationärer oder zumindest quasistationärer Natur ist, spielt dort das Zeitverhalten keine wesentliche Rolle. Dementsprechend werden auch keine besonderen Vorkehrungen in dieser Richtung getroffen.

Der Erfindung liegt die Aufgabe zugrunde, ein Gasspurenmeßgerät zu entwickeln, bei dem ein günstiges Zeitverhalten (schnelle Ansprechzeit und Regenerationszeit), sowie eine hohe Empfindlichkeit bei einem geringen Verbrauch an Reaktionslösung erreicht wird. Diese Forderungen sind normalerweise gegenläufig und konnten bisher nicht gleichzeitig erfüllt werden.

Diese Aufgabe wird, ausgehend von einer vertikal angeordneten Zerstäubervorrichtung, in der eine Reaktionsflüssigkeit zusammen mit dem zu messenden Gas kontinuierlich zerstäubt wird und einem daran anschließenden Trennrohr, das über einen hydrophilen Flüssigkeitsleiter mit einer Meßzelle verbunden ist, erfindungsgemäß in folgender Weise gelöst :

Die Meßzelle ist als optische Mikrodurchflußküvette mit einem Volumen von 0,2-1 cm³ ausgebildet und besitzt an ihrem oberen Ende einen den Flüssigkeitsleiter berührenden Einlauftrichter, während an ihrem unteren Ende ablaufseitig ein Siphon nachgeschaltet ist.

Vorteilhaft liegt das ablaufseitige Siphon-Niveau unmittelbar oberhalb der Mikrodurchflußküvette.

Eine Weiterentwicklung der Erfindung ist dadurch gekennzeichnet, daß an dem Trennrohr ein Einlaufstutzen angebracht ist, der die Zudosierung einer weiteren Hilfslösung zur Reaktionsflüssigkeit nach der Zerstäubung und Abscheidung an der Wand des Trennrohres ermöglicht. Auf diese Weise kann die durch den Transport der Flüssigkeit vom Ausgang des Zerstäubers bis zur Mikrodurchflußküvette bedingte Verweilzeit weiter verkürzt werden.

Zweckmäßig sind die Zerstäubervorrichtung, das Trennrohr, der Flüssigkeitsleiter und der Einlauftrichter in einen Schutzbehälter eingebaut.

Es war zunächst nicht vorherzusehen, daß unmittelbar im Anschluß an die Zerstäubervorrichtung eine optische Messung mit hoher Zuverlässigkeit und der geforderten Meßgenauigkeit in einer Mikromeßküvette durchgeführt werden kann. Erfahrungsgemäß werden beim Versprühen einer Flüssigkeit leicht Gasblasen eingetragen, die sich nicht ohne weiteres wieder entfernen lassen. Das Auftreten von Gasblasen in der Mikromeßküvette würde aber die photometrische Messung unmöglich machen. Überraschenderweise gelingt jedoch bei der erfindungsgemäßen Meßanordnung eine vollständige Trennung von Gasphase und Flüssigkeit auf dem Weg zwischen Zerstäubervorrichtung und Mikrodurchflußküvette. Weiterhin war zu befürchten, daß bei den relativ kleinen Mengenströmen leicht Schwankungen auftreten können, d. h., daß der Flüssigkeitsstrom durch die Mikromeßküvette nicht gleichmäßig ist, sondern entsprechend dem Abtropfen aus der Zerstäubervorrichtung Pulsationen unterworfen ist. Solche Pulsationen würden die optische Messung ebenfalls empfindlich stören. Der Flüssigkeitsleiter am Ende der Trennkammer wirkt jedoch zusammen mit dem Einlauftrichter vor der Mikromeßküvette und dem nachgeschalteten Siphon als Beruhigungsstrecke, so daß die erwähnten Schwankungen vermieden werden.

Die mit der Erfindung erzielten Vorteile sind im wesentlichen darin zu sehen, daß in einer relativ geringen Menge von Reaktionsflüssigkeit ein sehr hoher Gasanteil absorbiert werden kann. Auf diese Weise wird eine hohe Empfindlichkeit erzielt bei einem außerordentlich geringen Verbrauch an Reaktionsflüssigkeit. Der geringe Flüssigkeitsverbrauch ermöglicht gegenüber den bisherigen Geräten wesentlich längere Standzeiten. So muß z. B. bei durchgehendem Betrieb nur alle 3 bis 4 Wochen neue Reaktionslösung in den Vorratsbehälter eingeführt werden.

Aufgrund der geringen Flüssigkeitsmengen und der Messung in der Mikrodurchflußküvette wird auch ein sehr günstiges Zeitverhalten erreicht. Bei anderen Geräten vergleichbarer Bauart liegt z. B. die Regenerationszeit nach dem Auftreten einer bestimmten Konzentration fast um eine Größenordnung höher. Das schnelle Zeitverhalten des Gerätes ist von großer Bedeutung, wenn bei einer Grenzwertüberschreitung Alarm ausgelöst werden soll.

Das neue Meßsystem arbeitet praktisch wartungsfrei. Aufgrund der kompakten Bauweise und des geringen Volumens kann die gesamte Anordnung raumsparend aufgebaut werden.

Im folgenden wird die Erfindung anhand von Zeichnungen und Ausführungsbeispielen näher beschrieben.

Es zeigen :

Figur 1 den schematischen Aufbau der Meßanordnung und

Figur 2 das Zeitverhalten der Meßanordnung, erläutert am Beispiel der Phosgenmessung.

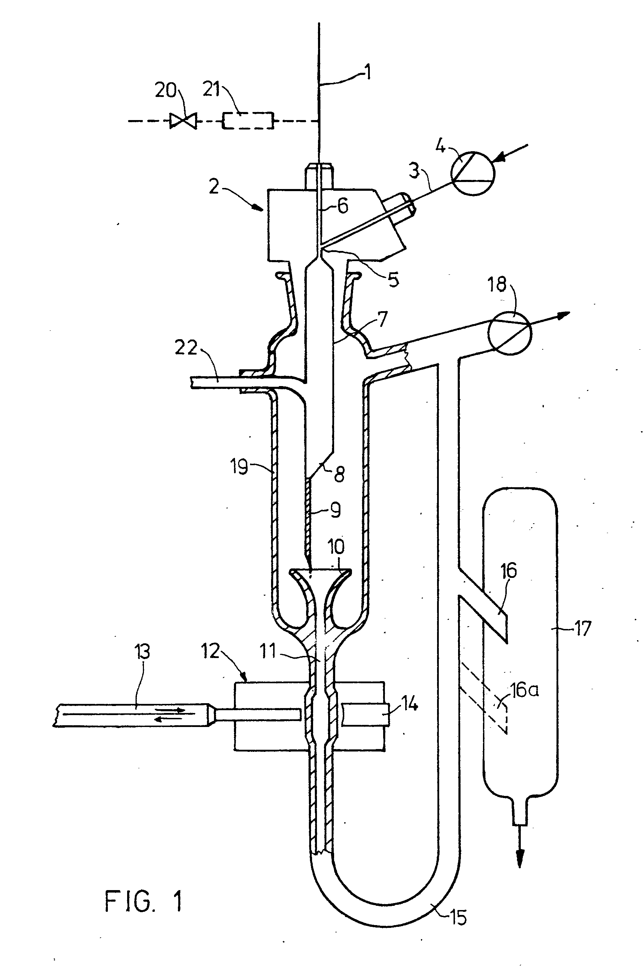

Bei der Meßanordnung gem. Fig. 1 wird das zu untersuchende Gasgemisch, z. B. Raumluft, durch die Leitung 1 mit einem Mengenstrom von z. B. 500 l/h mit Hilfe der Saugpumpe 18 in die Zerstäubervorrichtung 2 angesaugt. Über einen seitlichen Anschluß 3 an der Zerstäubervorrichtung 2 wird die Reaktionslösung, z. B. 20 ml/h mittels der Dosierpumpe 4 eindosiert. Der Reaktionslösungsstrom tritt durch die Zerstäuberdüse 5, z. B. $\varnothing = 0,6$ mm, aus und wird durch das in der engen Bohrung 6, z. B. $\varnothing = 3,5$ mm, vorbeiströmende Gas versprüht. Die pneumatische Zerstäubung bewirkt eine intensive Durchmischung des Gases mit der Reaktionsflüssigkeit, so daß optimale Voraussetzungen für eine hohe Absorption gegeben sind. Die Bohrung 6 erweitert sich am unteren Ende in ein Trennrohr 7 mit einem Einlaufstutzen 22 für eine weitere Hilfslösung, z. B. entsalztes Wasser, die den Transport der Reaktionsflüssigkeit zur Verminderung von Verzugszeiten beschleunigt. Auf der Innenwand des Trennrohres 7 sammelt sich die Flüssigkeit und fließt als dünner Film nach unten ab. Auf diese Weise wird das in der Sprühzone vorhandene Gas-Flüssigkeitsgemisch wieder in eine flüssige und gasförmige Phase zerlegt. Das Abfließen wird durch die Gasströmung beschleunigt. Das untere Ende 8 des Trennrohres 7 ist unter 45° zur Achse schräg abgeschnitten. Die Flüssigkeit sammelt sich an der tiefsten Stelle des Schrägschnittes und wird über einen hydrophilen Flüssigkeitsleiter 9, z. B. einen dünnen Glasstab ($\varnothing = 1$ mm) zu dem freien, trichterförmigen Eingang 10 (Einlauftrichter) der Küvetteneingangsleitung 11 geführt. Letztere steht mit einer Mikrodurchflußküvette 12 mit einem Volumen von 0,2-1 m³ in Verbindung. Die Mikromeßküvette 12 ist mit einem Zweikanallichtleiter 13 versehen. Das durch den einen Kanal herangeführte Meßlicht durchsetzt die Küvette, wird an dem rückseitigen Spiegel 14 reflektiert, durchsetzt die Küvette noch einmal und wird über den anderen Kanal des Lichtleiters 13 dem photoelektrischen Empfänger des Kolorimeters zugeführt. Auf diese Weise wird die optische Absorption der durch die Mikrodurchflußküvette 12 strömenden Flüssigkeit gemessen. Der Ausgang der Mikrodurchflußküvette 12 ist mit einem U-rohrförmigen Siphon 15 verbunden. Der Auslauf 16 des Siphon 15 muß in jedem Falle höher liegen als die Mikrodurchflußküvette 12. Damit ist gewährleistet, daß die Küvette 12 ständig blasenfrei mit Flüssigkeit gefüllt ist. Um eine besonders schnelle Ansprechzeit zu erreichen, ist das Auslaufrohr 16 und damit das ablaufseitige Siphon-Niveau unmittelbar oberhalb der Mikrodurchflußküvette 12 angeordnet (gestrichelte Darstellung 16a). Die aus dem Auslauf 16 ausfließende Flüssigkeit wird schließlich in einem Ablauftank 17 gesammelt. Die Zerstäubervorrichtung 2, das Trennrohr 7, der Flüssigkeitsleiter 9 und der Einlauftrichter 10 sind in einen über die Pumpe 18 evakuierbaren Schutzbehälter 19 eingebaut.

Im folgenden soll das Meßprinzip am Beispiel der Spurenmessung von Phosgen noch einmal erläutert werden. Die Reaktionslösung besteht in diesem Fall aus einer Lösung von 4-Nitrobenzyl-Pyridin und N-Phenylbenzylamin in Phthalsäurediathylester. Wird in diese Lösung Phosgen eingeleitet, so entsteht eine orangefarbene Verbindung, die bei 470 nm ihr Absorptionsmaximum besitzt. Der schematische Aufbau der Meßeinrichtung entspricht der in Fig. 1. Das Meßgas, z. B. Raumluft bzw. Kaminabluft, wird mit einem Mengenstrom von 300 l/h bzw. 50 l/h von der Gaspumpe 18 über ein Staubfilter (nicht gezeichnet) in den Zerstäuber 2 gesaugt. Gleichzeitig erweist sich zur Kompensation einer gewissen Feuchtequerempfindlichkeit (ca. 10 % vom Meßwert) die Zugabe von befeuchtetem Nullgas (50 l/h) als notwendig.

Zu diesem Zweck ist an der Gaseintrittsleitung eine Seitenleitung mit einem Feinventil 20 und einem Befeuchter 21 für das Nullgas vorgesehen. Als Nullgas dient Luft oder Stickstoff. Zum Nullabgleich wird anstelle des Meßgases Nullgas in die Apparatur geleitet.

Mittels der Dosierpumpe 4 wird die oben erwähnte Reaktionslösung in den Zerstäuber 2 gefördert und in dem vorbeiströmenden Meßgas versprüht. Die pneumatische Zerstäubung bewirkt eine intensive Durchmischung des Gases mit der Reaktionsflüssigkeit, so daß optimale Voraussetzungen für eine weitgehende Absorption und Reaktion gegeben ist. Durch Variation des Meßgasstromes bei konstantem Reaktionslösungsfluß kann somit der Meßbereich des Analysengerätes verändert werden.

Im Trennrohr 7 erfolgt die Entmischung des Flüssigkeits-Gas-Gemisches. Die ablaufende Meßlösung, die den vom Phosgen verursachten Farbkomplex enthält, fließt durch die Mikrodurchflußküvette 12, wo sie kolorimetrisch erfaßt wird. Durch eine stetige Verdrängung der vorhergehenden Meßlösung und durch die Volumenminimierung ist eine kurze Regenerationszeit gewährleistet.

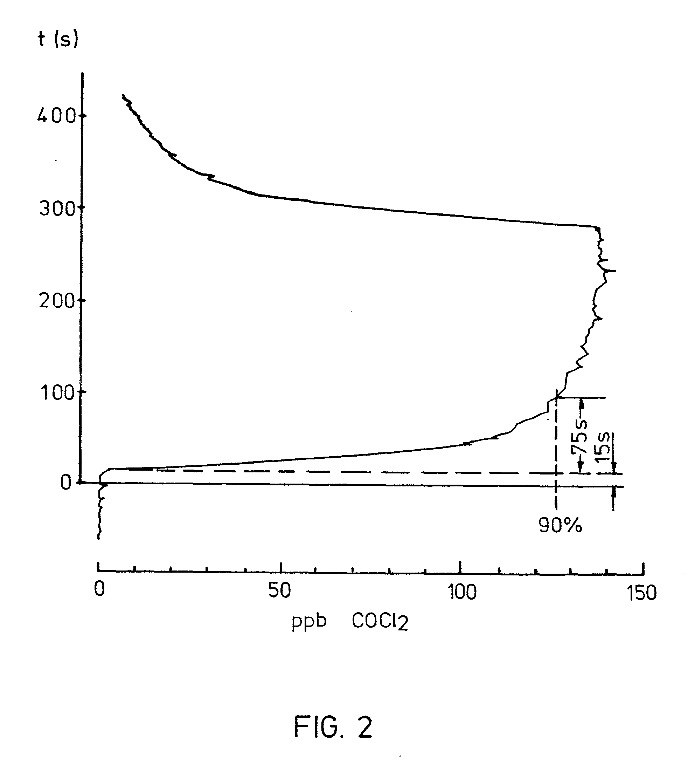

In Fig. 2 ist das Meßsignal (Abszisse) als Funktion der Zeit in s (Ordinate) aufgetragen. Zum Zeitpunkt t = 0 wurde Raumluft mit 0,15 ppm Phosgen pulsförmig in die Apparatur aufgegeben. Es ergibt sich eine ausgezeichnete Meßempfindlichkeit. Die Ansprechzeit beträgt 15 s, die 90 % Zeit 75 s. Systematische Messungen haben ergeben, daß die 90 % Zeit von 75 s praktisch unabhängig von der Konzentration des Meßgases ist. Legt man daher als Alarmschwelle den MAK-Wert (100 ppb) zugrunde, so erfolgt die Alarmgabe bei wenig mehr als 15 s. Mit diesem Zeitverhalten entspricht das Gerät den üblichen Anforderungen. Das Gerät bietet damit alle Voraussetzung für eine hochgenaue kontinuierliche Emissionsmessung.

Neben der guten Präzision, Empfindlichkeit und Spezifität ist wegen der hohen Überlastbarkeit der Einsatz beim Auftreten von Konzentrationsspitzen besonders geeignet.

## Ansprüche

1. Vorrichtung zur Messung von Gasspuren, bestehend aus einer vertikal angeordneten Zerstäubervorrichtung (2), in der eine Reaktionsflüssigkeit zusammen mit dem zu messenden Gas kontinuierlich zerstäubt wird und einem daran anschließenden Trennrohr (7), das über einen hydrophilen Flüssigkeitsleiter (9) mit einer Meßzelle verbunden ist, dadurch gekennzeichnet, daß die Meßzelle als optische Mikrodurchflußküvette (12) mit einem Volumen von 0,2 bis 1 cm³ ausgebildet ist, die an ihrem oberen Ende einen den Flüssigkeitsleiter (9) berührenden Einlauftrichter (10) aufweist und der an ihrem unteren Ende ablaufseitig ein Siphon (15, 16) nachgeschaltet ist.

2. Vorrichtung nach Anspruch 1, dadurch gekennzeichnet, daß das ablaufseitige Siphon-Niveau (16a) unmittelbar oberhalb der Mikrodurchflußküvette (12) liegt.

3. Vorrichtung nach Anspruch 1 und 2, dadurch gekennzeichnet, daß am Trennrohr (7) ein Einlaufstutzen (22) angebracht ist, der die Zudosierung einer weiteren Hilfslösung zur Reaktionsflüssigkeit nach der Zerstäubung und Abscheidung an der Wand des Trennrohres (7) ermöglicht.

4. Vorrichtung nach Anspruch 1 bis 3, dadurch gekennzeichnet, daß die Zerstäubervorrichtung (2), das Trennrohr (7), der Flüssigkeitsleiter (9) und der Einlauftrichter (10) in einen Schutzbehälter (19) eingebaut sind.

## Claims

1. Apparatus for measuring traces of gas, consisting of a vertically arranged atomiser (2), in which a reaction liquid is continuously atomised together with the gas to be measured, and, adjoining the atomiser (2), a separation pipe (7) which is connected to a measuring cell via a hydrophilic liquid-conducting means (9), characterised in that the measuring cell is in the form of an optical microthroughflow cell (12) with a volume of 0.2 to 1 $cm^3$, which has, at its upper end, an inlet funnel (10) in contact with the liquid-conducting means (9), and to which, at its lower, outlet, end and downstream thereof, a siphon (15, 16) is connected.

2. Apparatus according to Claim 1, characterised in that the siphon level (16a) at the outlet end is situated immediately above the micro-throughflow cell (12).

3. Apparatus according to Claim 1 and 2, characterised in that the separation pipe (7) is provided with an inlet pipe (22) which enables another auxiliary solution to be added to the reaction liquid after it has been atomised and deposited on the wall of the separation pipe (7).

4. Apparatus according to Claim 1 to 3, characterised in that the atomiser (2), the separation pipe (7), the liquid conducting means (9) and the inlet funnel (10) are built into a protective container (19).

## Revendications

1. Dispositif pour la mesure de traces de gaz composé d'un dispositif pulvérisateur (2) disposé verticalement, dans lequel un liquide de réaction est pulvérisé continuellement en même temps que le gaz à mesurer et d'un tube séparateur (7) raccordé à ce dispositif et qui est relié à une cellule de mesure par l'intermédiaire d'un conducteur de liquide hydrophile (9), caractérisé en ce que la cellule de mesure est constituée par une microcuvette à écoulement continu (12) possédant un volume de 0,2 à 1 $cm^3$, qui présente à son extrémité supérieure un entonnoir d'entrée (10) qui touche le conducteur de liquide (9) et à l'extrémité inférieure de laquelle un siphon (15, 16) est raccordé sur le côté de sortie.

2. Dispositif selon la revendication 1, caractérisé en ce que le niveau (16a) du siphon sur le côté de sortie se trouve directement au-dessus de la microcuvette (12) à écoulement continu.

3. Dispositif selon l'une des revendications 1 et 2, caractérisé en ce que, sur le tube séparateur (7) est montée une tubulure d'entrée (22) qui permet d'ajouter une autre solution auxiliaire au liquide de réaction à un débit dosé après la pulvérisation et le dépôt sur la paroi du tube séparateur (7).

4. Dispositif selon les revendications 1 à 3, caractérisé en ce que le dispositif pulvérisateur (2), le tube séparateur (7), le conducteur de liquide (9) et l'entonnoir d'entrée (10) sont montés dans un récipient protecteur (19).

FIG. 1

FIG. 2